# EUROPÄISCHE PATENTANMELDUNG

(11) **EP 0 854 093 A2**
(43) Veröffentlichungstag der Anmeldung: **22.07.1998**
(21) Anmeldenummer: 98100747.9
(22) Anmeldetag: 16.01.1998
(51) Int. Cl.: B65D 43/26

(54) **Verbindungssystem zweier Elemente**

(30) Priorität: 17.01.1997 DE 29700793 U
(71) Anmelder: LUDWIG SCHMITT GMBH, D-66131 Saarbrücken (DE)
(72) Erfinder: Schmitt, Horst, 67260 Wolfskirchen (FR)
(74) Vertreter: KUHNEN, WACKER & PARTNER

(57) **Zusammenfassung**

Verbindungssystem von einem ersten Element (1) mit zumindest einem zweiten Element (2), die mittels wenigstens eines Schnappelementes (3) verbindbar sind, dadurch gekennzeichnet, daß ein Schnappvorsprung (4) des Schnappelementes (3), das an einem der beiden Elemente angeordnet ist, unter Vorspannung zumindest einer Vorspanneinrichtung (5) an einem Rastelement (6), das an dem anderen Element angeordnet ist, einrastbar ist, das Schnappelement (3) um eine Abstützung (7) derart schwenkbar gelagert ist, daß sich an der Seite des Schnappelementes (3), welche von der Abstützung (7) aus gegenüber dem Schnappvorsprung (4) angeordnet ist, eine von außen zugängliche Betätigungseinrichtung (8) angeordnet ist, und das Schnappelement (3) bei der Schwenkbewegung, durch Aufbringung einer Kraft auf die Betätigungseinrichtung, aus der Raststellung am Rastelement (6) gegen die Vorspannung der Vorspanneinrichtung lösbar ist, so daß die Verbindung der beiden Elemente zerstörungsfrei lösbar bzw. trennbar ist.

## Beschreibung

Die Erfindung betrifft ein Verbindungssystem von einem ersten Element (Unterteil) mit zumindest einem zweiten Element (Deckel), die mittels wenigstens eines Schnappelements verbindbar sind.

Es ist Aufgabe der Erfindung, ein Verbindungssystem zweier Elemente mittels eines Rasthakens bzw. Schnappelements zu schaffen, welches ein einfaches, zerstörungsfreies, kostengünstiges sowie montagefreundliches, einfach montierbares und demontierbares Verbinden der Elemente ermöglicht.

Diese Aufgabe wird erfindungsgemäß dadurch gelöst, daß ein Schnappvorsprung des Schnappelements, das an einem der beiden Elemente angeordnet ist, unter Vorspannung zumindest einer Vorspanneinrichtung an einem Rastelement, das an dem anderen Element angeordnet ist, einrastbar ist, wobei das Schnappelement um eine Abstützung derart schwenkbar gelagert ist, daß sich an der Seite des Schnappelements, welche von der Abstützung aus gegenüber dem Schnappvorsprung angeordnet ist, eine von außen zugängliche Betätigungseinrichtung angeordnet ist, und wobei das Schnappelement bei der Schwenkbewegung, durch Aufbringung einer Kraft auf die Betätigungseinrichtung, aus der Raststellung am Rastelement gegen die Vorspannung der Vorspanneinrichtung lösbar ist, so daß die Verbindung der beiden Elemente zerstörungsfrei lösbar bzw. trennbar ist.

Ein Vorteil der Erfindung ist, daß zwei oder mehrere Elemente mittels eines oder mehrerer Schnappelemente ohne Schrauben oder ähnlichem durch einen einfachen Vorgang sowohl verbunden als auch zerstörungsfrei getrennt werden können. Das zerstörungsfreie Demontieren eines Deckels von einem Unterteil ist somit gemäß der vorliegenden Erfindung schnell und einfach durchführbar. Durch das hörbare Einschnappen des Schnappelements wird eine sichere und stabile Verbindung von zwei Elementen hergestellt.

Ferner kann das Schnappelement als Standardteil ausgeführt sein, und für die Verbindung unterschiedlichster Elemente eingesetzt werden. Dadurch ergehen sich weitere Kostenvorteile. Durch eine simple Drehbewegung gegen eine Vorspannung können die beiden Elemente äußerst schnell voneinander getrennt werden, wobei je nach Beanspruchung mehrere Schnappelemente verwendet werden können.

Wenn das Schnappelement nach Anspruch 2 in eine Öffnung des Deckels lösbar einrastet, wobei eine Schnappelement-Spanneinrichtung an einem Innenrastelement einrastbar ist und ein Außenrastelement die Abstützung darstellt, an dem ein Haken des Schnappelements einrastet, kann das Schnappelement unwillkürlich kaum betätigt werden, da die Vorspannkraft der Schnappelement-Spanneinrichtung überwunden werden muß. Damit wird ein ungewolltes Trennen der beiden verbundenen Elemente verhindert. Weiterhin kann das Schnappelement durch die Schnappelement-Spanneinrichtung bei einer Fehlfunktion eines Elements oder bei einer Verwendung in einer anderen Öffnung vom Deckel gelöst werden, indem die Schnappelement-Spanneinrichtung zusammengedrückt wird, um so ein Herausziehen des Schnappelements aus der Öffnung des Deckels zu ermöglichen.

Die Schnappelement-Spanneinrichtung stellt durch den geführten Sitz im Deckel eine exakte Position des Schnappvorsprungs bei der Verbindung der beiden Elemente sicher, so daß ein unproblematisches Verbinden der beiden Elemente möglich ist. Das Außenrastelement erhöht weiterhin den stabilen Sitz des Spannelements, und stellt zugleich die Abstützung dar. Dadurch erfüllt ein Element mehrere Funktionen gleichzeitig, vereinfacht so den Aufbau des Systems, und senkt damit die Kosten.

Mit einer Weiterbildung des Verbindungssystems nach Anspruch 3 ist eine Fläche des Schnappelements, welche zusammen mit dem Deckel einen Spalt bildet, die Betätigungseinrichtung darstellt und von außen mittels eines Werkzeugs, bevorzugt eines Schraubendrehers, durch eine Hebelkraft zur Demontage bzw. Trennung der beiden Elemente vorgesehen. Daraus ergibt sich der Vorteil, daß die Verbindung nur noch mittels eines entsprechenden Werkzeugs gelöst werden kann, und daß ein Transportieren, Stapeln und Schieben des Behälters durch keine hervorstehende Bauteile behindert wird. Somit ist ein ungewolltes Öffnen nahezu ausgeschlossen, wobei weiterhin eine schnelle und einfache Trennung der beiden Elemente erhalten bleibt. Dabei kann die Anordnung problemlos so getroffen werden, daß keine speziellen Anforderungen an das Werkzeug zu stellen sind, so daß ein Öffnen mit einfachsten Hilfsmitteln wie Küchenmesser, Gabel, Stiften oder selbst dem Fingernagel erfolgen kann.

Aufgrund der Tatsache, daß die Vorspanneinrichtung nach Anspruch 4 bevorzugt als elastischer Vorsprung des Unterteils ausgebildet ist, der eine Kraft gegen die Seite des Schnappelements ausübt, die dem Schnappvorsprung gegenüberliegt, liegt eine besonders einfache Verbindungsart vor, die auch bei Schlägen und Vibrationen eine sichere Verbindung aufrecht erhält.

Von weiterem Vorteil ist es, wenn das Unterteil nach Anspruch 5 seitlich zumindest doppelwandig ausgeführt ist, wobei zwischen den Seitenwänden Bohrungen zur Befestigung vorgesehen sind. Dadurch erhöht sich zum einen die Widerstandsfähigkeit gegenüber von außen einwirkenden Kräften, als auch die Wärmedämmung von außen, zum anderen wird so gleichzeitig eine Befestigung an einem weiteren Element oder ähnlichem ermöglicht.

Wenn der Deckel nach Anspruch 6, nachdem das Schnappelement vom Rastelement gelöst worden ist, mit Hilfe eines Gegendrucks einer Dichtung, zwischen einer inneren Wand des Unterteils und dem Deckel, vom Unterteil trennbar ist, läßt sich die Verbindung mit nur einer Hand lösen, da sich der Deckel durch den Druck anhebt. Darüber hinaus gewährleistet die Dichtung auch einen sicheren Verschluß von Flüssigkeiten oder ähnlichem.

Von weiterem Vorteil ist es, wenn der Deckel, das Unterteil und das Schnappelement nach Anspruch 7 bevorzugt aus Kunststoff, insbesondere Polyamid 66, aufgebaut sind, so daß die Elemente kostengünstig produziert werden können und eine entsprechende Flexibilität aufweisen.

Weitere Einzelheiten, Merkmale und Vorteile der Erfindung ergeben sich aus der nachfolgenden Beschreibung einer Ausführung der Erfindung anhand der Zeichnung.

Es zeigt:
- Fig. 1: in einem Längsschnitt ein Verbindungssystem gemäß der vorliegenden Erfindung beim Lösen der beiden Elemente mittels eines Schraubendrehers;
- Fig. 2 und 3: in einer Darstellung entsprechend Fig. 1 des Verbindungssystems bei je einer Phase des Zusammenfügens des Systems;
- Fig. 4: in einer Darstellung entsprechend Fig. 1 des Verbindungssystems im verbundenen Zustand; und
- Fig. 5: eine Gesamtansicht des Systems, wobei das Schnappelement nicht montiert ist.

Eine Ausführungsform eines erfindungsgemäßem Verbindungssystems zweier Elemente mittels wenigstens eines Schnappelements wird nachfolgend mit Bezug auf die Zeichnung beschrieben.

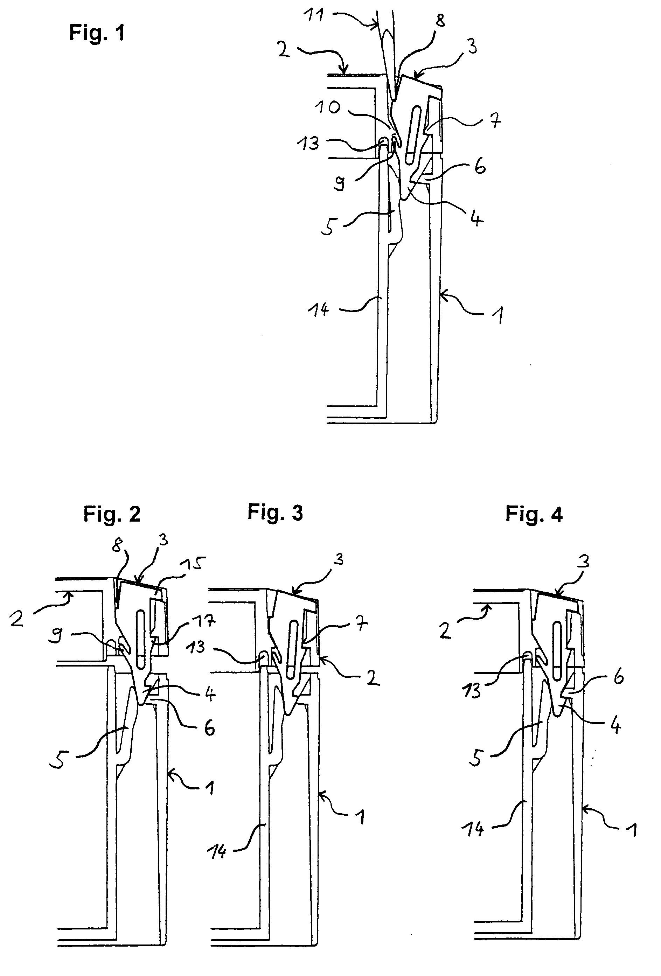

Fig. 1 stellt das Trennen eines Deckels 2 von einem Unterteil 1 durch ein Schwenken eines Schnappelements 3 im Maßstab 1:1 dar. Das Schwenken des Schnappelements 3 wird im Beispielsfalle durch einen Schraubendreher 11 hervorgerufen, der an einer Seitenfläche 8 des Schappelements 3, welche zusammen mit dem Deckel 2 einen Spalt bildet, mit einer Hebelkraft angreift. Dabei dreht sich das Schnappelement 3 um eine Abstützung 7, welche an der anderen Seite des Schnappelements 3 anliegt und im Deckel angeordnet ist. Eine Vorspanneinrichtung 5 wirkt diesem Schwenken entgegen. Die Vorspanneinrichtung 5 wird bevorzugt als elastischer Vorsprung 5 am Unterteil angeordnet. Ein Schnappvorsprung 4, der sich an einem Ende des Schnappelements 3 befindet, löst sich dabei von einem Rastelement 6, das am Unterteil 1 angebracht ist. Wenn das Schnappelement 3 die Verbindung des Unterteils 1 und des Deckels 2 löst, läßt sich der Deckel 2 vom Unterteil 1 abheben. Darüber hinaus hebt sich der Deckel 2 durch den Druck einer in Schließstellung des Deckels 2 nur teilkomprimierten Dichtung 13, die zwischen einer inneren Wand 14 des Unterteils 1 und dem Deckel 2 angeordnet ist und im Deckel 2 eingeschäumt ist.

Das Schnappelement 3 weist an der Seite, an der auch der Schraubendreher 11 angreift, eine Schnappelement-Spanneinrichtung 9 auf. Diese wird durch das Schwenken des Schnappelements 3 verstärkt gegen den Deckel 2 gedrückt und verformt bzw. verbiegt sich dabei.

Die Fig. 2 und 3 zeigen den Verbindungsvorgang des Deckels 2 mit dem Unterteil 1. Wie in Fig. 2 zu sehen, ist das Schnappelement 3 vor dem Zusammenfügen der beiden Elemente im Deckel 2 angebracht. Das Schnappelement 3 wird mit dem Schnappvorsprung 4 voraus in den Deckel 2 eingeschoben. Auf der einen Seite des Deckels 2 stützt sich das Schnappelement 3 an einer Fläche unterhalb der Betätigungseinrichtung 8 und über die Schnappelement-Spanneinrichtung 9 ab, und wird auf der anderen Seite durch die Abstützung 7 und einen Hacken 17 des Schnappelements 3 im Deckel 2 positioniert. Ein Fortsatz 15 des Schnappelements 3 verhindert ein zu weites Eindringen des Schnappelements 3 in den Deckel 2, so daß sich die Kunststoffteile nicht miteinander verklemmen können.

Die abgerundet zulaufende Ausführung des Schnappvorsprungs 4 begünstigt ein korrektes Zusammenführen des Deckels 2 und des Unterteils 1, wobei sich der Schnappvorsprung 4 des Schnappelements 3 zwischen die Vorspanneinrichtung 5 und das Rastelement 6 schiebt.

In Fig. 3 ist zu sehen, daß das Schnappelement 3 beim Zusammenfügen der beiden Elemente durch das Rastelement 6 leicht gedreht bzw. geschwenkt wird. Dabei muß die Vorspannkraft der Vorspanneinrichtung 5 des Unterteils 1 und die Vorspannkraft der Schnappelement-Spanneinrichtung 9 des Schnappelements 3 überwunden werden. Gleichzeitig wird die Innenwand 14 des Unterteils 1 in die Dichtung 13 des Deckels 2 eingepaßt.

Fig. 4 zeigt den Zustand, in dem die beiden Elemente durch das Schnappelement 3 verbunden sind. Dabei liegen die Außenwände der beiden Elemente aneinander an und die Innenwände der beiden Elemente werden durch die Dichtung 13 abgedichtet. Die Vorspanneinrichtung 5 hält das Schnappelement 3 mit Hilfe einer Vorspannung in der Raststellung am Rastelement 6. Zum Lösen der Verbindung der beiden Elemente kann nun gemäß der Beschreibung von Fig. 1 fortgefahren werden. Dieser Verbindungs- und Trennungs-Vorgang des Verbindungssystems mittels des Schnappelements 3 ist beliebig oft wiederholbar.

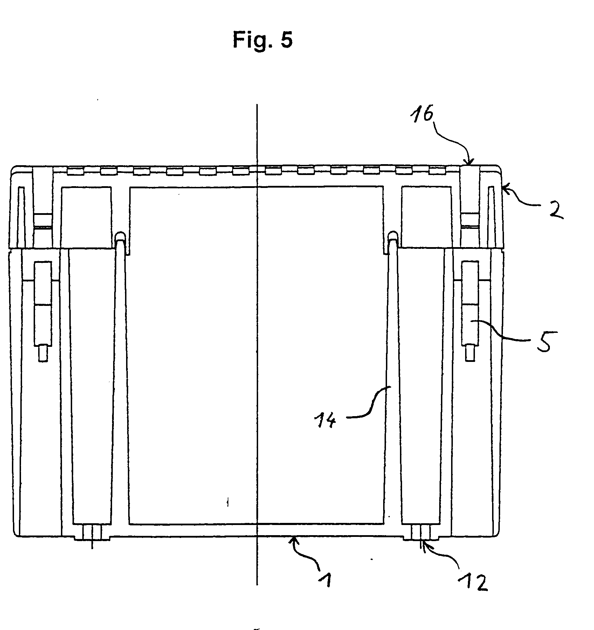

Fig. 5 zeigt eine Ausführungsform eines Deckels 2 und eines Unterteils 1 gemäß der vorliegenden Erfindung, wobei eine Öffnung 16 des Deckels 2 um 90° gedreht darstellt ist. In dieser Ausführungsform sind zumindest zwei Öffnungen 16 im Deckel 2 zur Unterbringung eines Schnappelements 3 vorgesehen. An der Unterseite des Unterteils 1 sind Bohrungen 12 vorgesehen, um dieses an einem anderen Element zu befestigen.

Es ist klar, daß andere Ausführungsformen durch Variationen von Einzelheiten dieser Erfindung möglich sind, ohne den Grundgedanken der Erfindung zu verlassen.

Zum Beispiel kann der Schnappvorsprung des Schnappelements auch einstückig als Vorspanneinrichtung ausgebildet sein. Andererseits kann ein ringförmiges Schnappelement in Verbindung mit einer ringförmigen Vorspanneinrichtung die Dichtung der beiden Elemente übernehmen. Alternativ oder zusätzlich zur eingeschäumten Dichtung kann die Passung zwischen dem Deckel und dem Unterteil auch konisch zulaufend ausgebildet werden, so daß sich der Deckel beim Lösen der Verbindung vom Unterteil stärker abhebt.

## Patentansprüche

1. Verbindungssystem von einem ersten Element (1) mit zumindest einem zweiten Element (2), die mittels wenigstens eines Schnappelementes (3) verbindbar sind,
dadurch gekennzeichnet, daß
ein Schnappvorsprung (4) des Schnappelementes (3), das an einem der beiden Elemente angeordnet ist, unter Vorspannung zumindest einer Vorspanneinrichtung (5) an einem Rastelement (6), das an dem anderen Element angeordnet ist, einrastbar ist,
das Schnappelement (3) um eine Abstützung (7) derart schwenkbar gelagert ist, daß sich an der Seite des Schnappelementes (3), welche von der Abstützung (7) aus gegenüber dem Schnappvorsprung (4) angeordnet ist, eine von außen zugängliche Betätigungseinrichtung (8) angeordnet ist,
und das Schnappelement (3) bei der Schwenkbewegung, durch Aufbringung einer Kraft auf die Betätigungseinrichtung, aus der Raststellung am Rastelement (6) gegen die Vorspannung der Vorspanneinrichtung lösbar ist,
so daß die Verbindung der beiden Elemente zerstörungsfrei lösbar bzw. trennbar ist.

2. Verbindungssystem nach Anspruch 1, dadurch gekennzeichnet, daß das Schnappelement (3) in eine Öffnung des Deckels (2) lösbar einrastbar ist, wobei eine Schnappelement-Spanneinrichtung (9) an einem Innenrastelement (10) einrastbar ist und ein Außenrastelement (7) die Abstützung (7) darstellt.

3. Verbindungssystem nach Anspruch 1 oder 2, dadurch gekennzeichnet, daß eine Fläche (8) des Schnappelements (3), welche zusammen mit dem Deckel (2) einen Spalt bildet, die Betätigungseinrichtung (8) darstellt und von außen mittels eines Werkzeugs, bevorzugt eines Schraubendrehers (11), durch eine Hebelkraft zur Trennung bzw. Demontage der beiden Elemente dient.

4. Verbindungssystem nach einem der vorhergehenden Ansprüche, dadurch gekennzeichnet, daß die Vorspanneinrichtung bevorzugt als elastischer Vorsprung (5) des Unterteils (1) ausgebildet ist, der eine Kraft gegen die Seite des Schnappelements (3) ausübt, die dem Schnappvorsprung (4) gegenüberliegt.

5. Verbindungssystem nach einem der vorhergehenden Ansprüche, dadurch gekennzeichnet, daß das Unterteil (1) an den Seiten zumindest doppelwandig ausgeführt ist, wobei Bohrungen (12) zwischen den Seitenwänden zur Befestigung vorgesehen sind.

6. Verbindungssystem nach einem der vorhergehenden Ansprüche, dadurch gekennzeichnet, daß der Deckel (2), nachdem das Schnappelement (3) vom Rastelement (6) gelöst worden ist, mit Hilfe eines Gegendrucks einer Dichtung (13), zwischen einer inneren Wand (14) des Unterteils (1) und dem Deckel (2), vom Unterteil (1) trennbar ist.

7. Verbindungssystem nach einem der vorhergehenden Ansprüche, dadurch gekennzeichnet, daß der Deckel (2), das Unterteil (1) und das Schnappelement (3) aus Kunststoff, bevorzugt Polyamid, aufgebaut sind.
